# EUROPEAN PATENT SPECIFICATION

(11) **EP 1 555 792 B1**
(45) Date of publication and mention of the grant of the patent: **24.10.2007**
(21) Application number: 04258044.9
(22) Date of filing: 22.12.2004
(51) Int. Cl.: H04L 29/08

(54) **Apparatus and method for sharing services on a network**
Vorrichtung und Verfahren zur gemeinsamen Nutzung von Diensten in einem Netzwerk
Un appareil et une méthode pour partager des services dans un réseau

(30) Priority: 08.01.2004 KR 2004001194
(43) Date of publication of application: 20.07.2005
(73) Proprietor: SAMSUNG ELECTRONICS CO., LTD., Suwon-si, Gyeonggi-do (KR)
(72) Inventor: Lee, Jae-shin, Jongro-gu, Seoul (KR); Jung, Dong-shin, Seongbuk-gu,Seoul (KR); Son, Kyoung-ho, Seoul (KR)
(74) Representative: Davies, Robert Ean

(56) References cited:
- EP-A- 1 345 357
- MARPLES D ET AL: "THE OPEN SERVICES GATEWAY INITIATIVE: AN INTRODUCTORY OVERVIEW" IEEE COMMUNICATIONS MAGAZINE, IEEE SERVICE CENTER. PISCATAWAY, N.J, US, vol. 39, no. 12, December 2001 (2001-12), pages 110-114, XP001110510 ISSN: 0163-6804

## Description

The present invention relates to an apparatus and method for sharing services on a network and, more specifically, but not exclusively, to an apparatus and a method for sharing services on a network wherein the services can be shared between OSGi (Open Service Gateway Initiative) service platforms of a device operating on a desired network so that the services can be provided without installing all standard services on each of the OSGi service platforms.

As digital and Internet technologies are spreading rapidly, a digital home construction is in progress which provides general users with services to help them in their daily lives using the technologies.

Digital home technology aims to provide more various services using an external communication infra-structure which goes beyond simple home networking which has been directed to sharing an existing ultra high speed Internet connection, files and peripheral apparatus.

A representative service platform of such digital home technology is an OSGi (Open Service Gateway initiative) service platform that is formed to operate on the basis of a JAVA Virtual Machine.

The OSGi service platform is installed in a home gateway and provides a service execution environment capable of receiving external various services and operating them on the basis of interconnecting operation of devices operating on the home network.

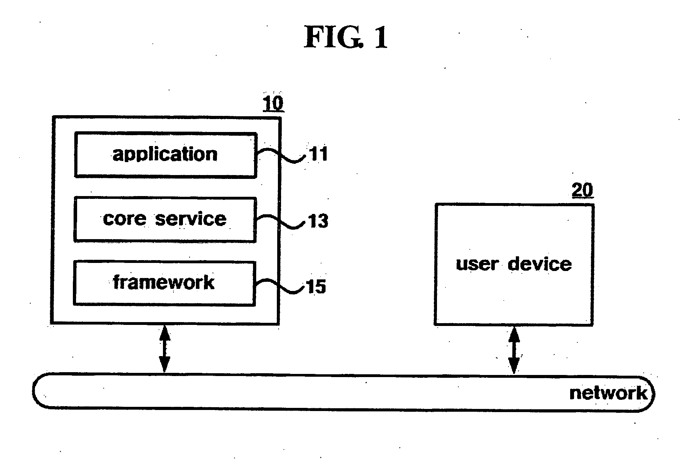

For doing that, the OSGi service platform 10 includes a service framework 15 for performing service transfer and management to provide the service execution environment, a plurality of core services 13 for performing various services, and various application services 11 which were developed using a plurality of core services 13, as shown in FIG. 1

On the home network on which a plurality of devices including the OSGi service platform constructed as described above operate, the OSGi service platform of each device does not mutually share the core services according to a property of the service framework 15.

That is, the core services needed individually should be installed and registered in a framework itself, and desired core services requested in the execution environment itself should be called and operated when a desired service is requested from the user.

As development of various services that use the OSGi service platform and a dynamic execution environment of the OSGi service platform has been highlighted, a Multi-Service-Platform structure has appeared, which is applied to various devices and operates a plurality of OSGi service platforms in the home network.

Because of this, there occurs a necessity of interoperating the Multi-Service-Platforms therebetween and an existing OSGi service platform can provide a proper service only when a core service is registered in a corresponding framework even if it is the core service performing the same function. Therefore, resource utilization between frameworks of the OSGi service platform operating on the home network has not been accomplished.

Therefore, there is a problem that the core service requested as the same functions are performed may be overlapped when installed on a framework of each OSGi service platform on the home network.

That is, when a device A requests a core service A through the OSGi service platform A in order to provide a desired service, even though the core service A is supported in an OSGi service platform B of a device B operating on the network, a conventional technology can not utilize the resource of the OSGi service platform B and has to register and install duplicately the core service A, more than once, on the OSGi service platform A.

Also, in business models such as a service lease or sale, there is a problem that the user has to pay more than once for each device to drive the same service.

Furthermore, even when another service needed to drive a service requested in a current device is registered in the OSGi service platform that is performed in another device, since there is no way to request the corresponding service from the other device or to register the corresponding service in its own OSGi service platform, a new method to address the above problems is desirable.

In order to complement such problems of the conventional technology, even though Korean Patent Application No. 2001-0030036 and published as 2002-0091312 (titled "Appliance network control system"), in which all functions of a master are loaded in a device having a user interface function and other devices communicate with a predetermined slave or make a communication by a simple control code, establishes equipment which includes no communication module as a slave so that the slave can be controlled by the master to which all functions are loaded, it can not satisfy a service that involves sharing between the OSGi service platforms of the device operating on the home network.

It is an aim of embodiments of the present invention to decide a role for sharing services in order that the services can be shared between OSGi service platforms of devices operating on a desired network using a desired election algorithm.

It is another aim of embodiments of the present invention to process service requests received from a user through an OSGi service platform having a plurality of core services according to the decided role.

Embodiments of the present invention allow a service role to be decided for sharing a desired core service between OSGi service platforms of devices operating on a network through a service agent module included in the OSGi service platform and the service role to be configured in the OSGi service platform.

Also, embodiments of the present invention allow a core service to be requested for a desired service support according to the decided role through the OSGi service platform of an assigned device.

The service role is decided through system resource information collected from each of the devices, which is determined to be a master or an agent for a desired core service, according to the system resource information collected using a desired election algorithm in an exemplary embodiment of the present invention.

The master is defined to provide the corresponding core service as a device having the system resource information higher than the desired core service, and defined as a device which provides a core service requested for a desired service support using an assigned core service provided through the OSGi service platform of the master.

The service agent module is configured as a master agent module or an agent module according to a service role decided as described above.

According to a first aspect of the present invention, there is provided an apparatus for sharing services on a network, comprising: a service role configuration unit for deciding a service role to share a desired core service through an election algorithm when connected to a desired network; and a service request processing unit for processing and requesting the core service requested to support a desired service from an OSGi service platform of the device assigned externally according to a service role decided by the service role configuration unit.

Preferably, the service request processing unit includes a data conversion part for converting the core service request information to transmit the core service requested, according to the service role, to the OSGi service platform of the assigned device; and a core service linker for transmitting the core service request information converted by the data conversion part to the OSGi service platform of the assigned device.

According to a second aspect of the present invention, there is provided a method for sharing services on a network, comprising the steps of: deciding a service role for sharing a desired core service connected to a desired network; and requesting a core service requested for desired service support according to the decided service role from an OSGi platform of a device assigned externally.

Preferably, the method for sharing the services on the network further comprises the step of operating a core service requested for supporting a desired service according to the decided service role and transmitting the obtained result value to the device which requested the core service.

For a better understanding of the invention, and to show how embodiments of the same may be carried into effect, reference will now be made, by way of example, to the accompanying diagrammatic drawings in which:
FIG. 1 is a schematic view showing an operational construction of an OSGi service platform in the art;
FIG. 2 is a schematic view showing a construction of a service apparatus for sharing services on a network in accordance with an exemplary embodiment of the present invention;
FIG. 3 is a schematic view showing a service role decision procedure for sharing services on a network in accordance with an exemplary embodiment of the present invention; and
FIG. 4 is a schematic view showing a service processing procedure for sharing services on a network in accordance with an exemplary embodiment of the present invention.

Hereinafter, in describing an apparatus and a method for sharing services on a network in accordance with an exemplary embodiment of the present invention with reference to the accompanying drawings, even though the apparatus and method are described as being embodied through a service agent module included in an OSGi service platform, it will be recognized by those skilled in the art that this description is simply an example, and it is possible to make various changes and other embodiments to a method wherein a service role of each device is decided in order to provide a desired core service using system resource information and the core service is provided through the OSGi service platform of the device assigned according to the decided service role.

Also, in describing an apparatus and a method for sharing services on a network in accordance with the present invention, even though a system constructed on the basis of the OSGi service platform is described as an exemplary embodiment in order to make the present invention understood easily, it will be recognized by those skilled in the art that the system is simply an example, and can be applied to middleware which has a similar function with framework to perform various services requested in order to provide a desired application through devices operating on a desired network.

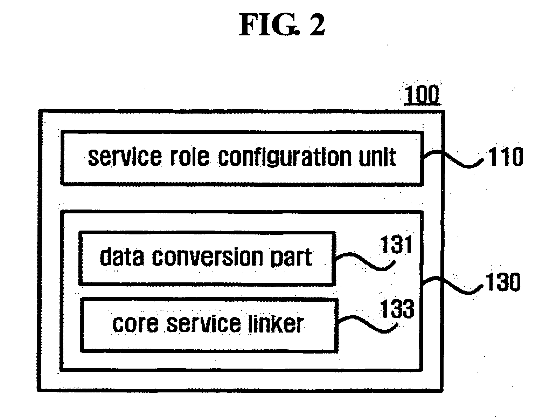

FIG. 2 is a schematic view showing a construction of a service apparatus for sharing services on a network in accordance with an exemplary embodiment of the present invention.

Referring to FIG. 2, a service agent module 100 as an apparatus for sharing services on a network in accordance with an exemplary embodiment of the present invention includes a service role configuration unit 110 and a service request processing unit 130.

The service role configuration unit 110 decides a service role for sharing a desired core service through an election algorithm using system resource information that is collected from devices operating on the network.

That is, the service role configuration unit 110 collects the system resource information of the devices received into a response message by broadcasting a discovery message when the devices are connected to the network, and decides the service role with the election algorithm using the collected system resource information.

Also, the service role configuration unit 110 configures a service agent module as a master agent module or an agent module in accordance with the service role decided through the election algorithm.

Proxy information of a corresponding device is configured by letting network devices operating on the network know about its service role according to the decided service role and requesting proxy information to a device assigned to provide a desired core service.

The service request processing unit 130 internally provides the core service requested for a desired service support or requests to process the core service at the OSGi service platform of the device assigned externally according to the service role decided by the service role configuration unit 110. The service request processing unit 130 includes a data conversion part 131 and a core service linker 133.

The data conversion part 131 analyzes service request information and converts the service request information in order to operate the core service requested to provide a corresponding service when a service role of the service agent module is a master, and converts the service request information to transmit the service request information to the master when the service role is an agent.

When the service request information is converted in order to transmit the service request information to the master agent module, the data conversion part 131 packages a service used to transmit the service requested through the network to an assigned master agent module and input data.

The core service linker 133 transmits the service request information converted by the data conversion part 131, according to a service role, to the master using a core service proxy, or operates the core service according to the service request information converted by the data conversion part 131.

Also, the core service linker 133 transmits a result value obtained after operating the corresponding service to the agent that has requested a service when the service request information is requested by a desired agent.

For reference, in the apparatus for sharing services on the network in accordance with an exemplary embodiment of the present invention described above, each module can be entirely constructed as hardware, or a part of the module can be constructed as software, or the entire module can be constructed as software.

Accordingly, it is clear that the apparatus for sharing services on the network in accordance with an exemplary embodiment of the present invention does not depart from the idea of the present invention since the apparatus is constructed as hardware or software, and the modification and change can be added since the apparatus is constructed with software and/or hardware without departing from the idea of the present invention.

A method for sharing services on the network in accordance with embodiments of the present invention which uses the apparatus for sharing services on the network constructed as described above will be explained in detail with reference to the accompanying drawings.

The method for sharing services on the network in accordance with embodiments of the present invention roughly includes a step for deciding a service role and a step for providing a service requested according to the decided service role.

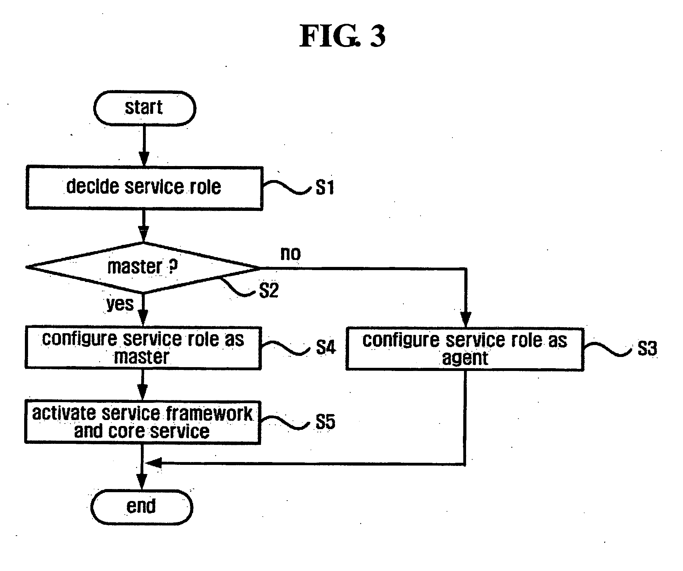

FIG. 3 is a schematic view showing a service role decision procedure for sharing services on a network in accordance with an exemplary embodiment of the present invention.

Referring to FIG. 3, when a device connected to a desired network starts to operate, the service role configuration unit 110 of the service agent module multicasts a discovery message to devices operating on the network to decide a service role.

Accordingly, when a response message is received from the devices operating on the network, the service role is decided with an election algorithm using system resource information of each of the devices collected through the response message (S1).

When the service role is decided, the service role configuration unit 110 determines whether the service role of the device is a master (S2).

When the service role is not the master as a result of the determination, the service role is configured in the OSGi service platform as an agent (S3).

When the service role is the master as a result of the determination, the master is configured in the OSGi service platform (S4), and the service framework and the core service are activated (S5).

When the service role is decided through such a procedure, the service role configuration unit 110 informs devices operating on the network of its decided service role.

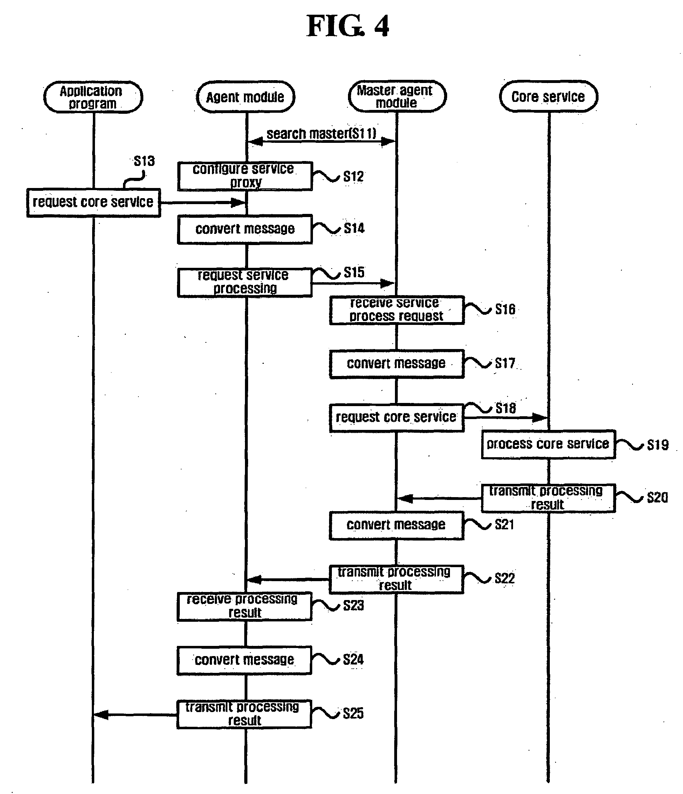

FIG. 4 is a schematic view showing a service processing procedure for sharing services on a network in accordance with an exemplary embodiment of the present invention.

Referring to FIG. 4, a service agent module informs devices operating on a network of its role in order to process a desired core service, and searches for a master agent module through information received in response to that.

Next, proxy information is requested from the master agent module and the proxy information received from the master agent module is configured.

In an agent module in which information for the device assigned for providing a desired core service through the master agent module is configured, when the desired core service is requested for supporting a service of an application program, corresponding core service request information is transmitted to a master agent module assigned using the configured proxy information.

That is, in an agent module in which a service role is an agent, for example, the master agent module is searched for in order to provide a core service requested from the application program according to the service role (S11).

Next, when the master agent module is searched for, the proxy information is requested from the master agent module and the received proxy information is configured (S12) .

Next, when the core service is requested in order to provide a desired service from the application program in the agent module (S13), the agent module converts the service request information in order to transmit the service request information to the master agent (S14).

The converted service request information is transmitted to the master agent module together with a service process request message (S15).

The master agent module analyzes the service request information and converts the service request information to operate the requested core service (S17) when the service process request message is received (S16), and transmits the core service request to the OSGi service platform (S18).

Accordingly, the OSGi service platform processes the core service request to perform the corresponding core service (S19), and transmits a result value obtained after the process is performed to the master agent module (S20).

The master agent module converts the core service process result value received from the OSGi service platform to transmit it to the agent module (S21), and provides the agent module with the requested core service process result (S22).

When the agent module receives the processed result value from the master agent module (S23), the agent module converts the received process result value to transmit it to the application program which has requested the core service (S24) and then transmits it to the application program (S25).

The core service is shared between the OSGi service platforms of the devices operating on the network through the service role decision and service role processing procedure.

For an example, when an XML Parser service is requested among the OSGi core services in the application program of a small device such as a PDA (Personal Digital Assistant), since there is less system load operating on a network in an agent module included in the OSGi service platform of the PDA, the XML Parser service is requested to the master agent module capable of a high-speed process, and the XML Parser service is provided to the master agent module through the OSGi service platform of the master agent.

Accordingly, the user can be provided with a relatively high speed process and a large amount of data analysis which is requested according to the XML Parser service through the PDA.

For another example, when a UPnP service is requested among the OSGi core services in the application program of the small device such as the PDA, the UPnP service is requested from a master agent module operating on the network in the agent module included in the OSGi service platform of the PDA and the UPnP service is provided through the OSGi service platform of the master agent module.

Accordingly, the user can also be provided through the PDA with the following services: a network configuration of the device which is requested in order to support multicasting according to the UPnP service and 5 or more support threads to store device information found by continuous network analysis.

For another example, when a Preference service is requested among the OSGi core services in the application program of a desired device, the agent module included in the OSGi service platform of the corresponding device requests the Preference service from the master agent module operating on the network and receives the Preference service through the OSGi service platform of the master agent module.

That is, while the Preference service should provide a mechanism which enables data to be stored by supporting a Persistent storage area or saving to a separate external database, a device which is requested of a Preference service according to the method for sharing services in accordance with the present invention can support a service through a master agent module capable of supporting the Preference service without including a mechanism for storing data by storing to the Persistent storage area or the external database.

In accordance with embodiments of the present invention, a service can be shared between OSGi service platforms of devices operating on a desired network according to a service role decided using a desired election algorithm.

Also, a core service can be provided without installation and operation for all core services in an independent OSGi service platform.

Also, a service can be supported by providing the core service through the OSGi service platform of the master agent module even in the device which has no sufficient system specification.

Attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus (100) for sharing services on a network, comprising:
a service role configuration unit (110) for deciding a service role to share a desired core service through an election algorithm when connected to a desired network ; and
a service request processing unit (130) for processing and requesting a core service requested to support a desired service from a service platform of an external device assigned to provide the desired core service, according to the service role decided by the service role configuration unit.

2. The apparatus according to claim 1, wherein the election algorithm comprises a mechanism for deciding the service role according to system resource information collected from devices operating on the network.

3. The apparatus according to claim 2, wherein the service role configuration unit is operable to inform the devices on the network of the decided service role.

4. The apparatus according to any preceding claim, wherein the service role configuration unit is operable to request proxy information from the external device assigned for providing the desired core service according to the service role and to configure the proxy information of the external device.

5. The apparatus according to any preceding claim, wherein the service request processing unit includes:
a data conversion part (131) for converting core service request information to transmit the requested core service, according to the service role, to the service platform of the assigned device; and
a core service linker (133) for transmitting core service request information converted by the data conversion part to the service platform of the assigned device.

6. The apparatus according to claim 5, wherein the data conversion part is operable to analyze the core service request information according to the data service role and to enable the core service requested to support the corresponding desired service to be operated.

7. The apparatus according to claim 5 or 6, wherein the core service linker is operable to use proxy information of the external device in order to transmit the core service request information.

8. A method for sharing services on a network, comprising:
deciding (S1) a service role for sharing a desired core service connected to a desired network; and
requesting the desired core service requested for desired service support according to the decided service role from a platform of a device assigned externally.

9. The method according to claim 8, further comprising operating the core service requested for supporting the desired service according to the decided service role and transmitting (S20) the obtained result value to a device which requested the core service.

10. The method according to claim 8 or 9, wherein deciding the service role includes:
collecting system resource information from devices which are connected to the network; and
deciding the service role using the collected system resource information.

11. The method according to claim 10, further comprising configuring the decided service role and informing the devices connected to the network of the configuration.

12. The method according to claim 10 or 11, further comprising requesting proxy information from the device assigned for providing the desired core service according to the decided service role and configuring proxy information of the device.

13. The method according to any of claims 10-12, wherein the service role is decided according to the system resource information collected through a desired election algorithm.

14. The method according to any of claims 8-13, wherein requesting the core service from the service platform of the device assigned externally includes:
transmitting (S18) core service request information to the device assigned for providing the core service when the core service is requested;
enabling (S19) the core service corresponding to the device assigned externally, to operate according to the
received core service request information; and
providing (S20) the device which has requested the core service with a result value obtained as a result of operating the core service.

15. The method according to claim 14, wherein the core service request information is transmitted using proxy information of the device assigned for providing the core service.

16. A computer readable medium including program codes executable by a computer to perform a method for sharing services on a network, said method comprising:
deciding a service role for sharing a desired core service connected to a desired network; and
requesting the desired core service requested for desired service support according to the decided service role from a platform of a device assigned externally.

## Patentansprüche

1. Vorrichtung (100) zur gemeinsamen Nutzung von Diensten in einem Netzwerk, aufweisend:
eine Dienstrollen-Konfigurationseinheit (110) zum Festlegen einer Dienstrolle, um einen gewünschten Kerndienst über einen Auswahlalgorithmus gemeinsam zu nutzen, wenn man mit einem gewünschten Netzwerk verbunden ist; und
eine Dienstanforderungs-Verarbeitungseinheit (130) zum Verarbeiten und Anfordern eines angeforderten Kerndienstes, um einen gewünschten Dienst aus einer Diensteplattform eines externen Gerätes, das für die Bereitstellung des gewünschten Kerndienstes abhängig von der durch die Dienstrollen-Konfigurationseinheit festgelegten Dienstrolle zugeordnet ist, zu unterstützen.

2. Vorrichtung nach Anspruch 1, wobei der Auswahlalgorithmus einen Mechanismus zum Festlegen einen Mechanismus zum Festlegen der Dienstrolle abhängig von Systemressourceninformation, die aus in dem Netzwerk arbeitenden Geräten gesammelt wird, aufweist.

3. Vorrichtung nach Anspruch 2, wobei die Dienstrotten-Konfigurationseinheit so betreibbar ist, dass sie die Geräte in dem Netzwerk über die festgelegte Dienstrolle informiert.

4. Vorrichtung nach einem der vorstehenden Ansprüche, wobei die Dienstrollen-Konfigurationseinheit so betreibbar ist, dass sie Proxy-Information von dem externen Gerät anfordert, das zur Bereitstellung des gewünschten Kerndienstes abhängig von der Dienstrolle zugeordnet ist, und die Proxy-Information des externen Gerätes konfiguriert.

5. Vorrichtung nach einem der vorstehenden Ansprüche, wobei die Dienstanforderungs-Verarbeitungseinheit enthält:
einen Datenumwandlungsteil (131) zum Umwandeln von Kemdienst-Anforderungsinformation, um den angeforderten Kemdienst abhängig von der Dienstrolle an die Diensteplattform des zugeordneten Gerätes zu senden; und
einen Kerndienst-Unker (133) zum Übertragen von durch den Datenumwandlungstell umgewandelter Kerndienst-Anforderungsinformation an die Diensteplattform des zugeordneten Gerätes.

6. Vorrichtung nach Anspruch 5, wobei der Datenumwandlungsteit so betreibbar ist, dass er die Kerndienst-Anforderungsinformation abhängig von der Datendienstrolle analysiert und den angeforderten Kerndienst freigibt, um die Ausführung des entsprechenden gewünschten Dienstes, zu unterstützen.

7. Vorrichtung nach Anspruch 5 oder 6, wobei der Kerndienst-Unker so betreibbar ist, dass er Proxy-Information des externen Gerätes verwendet, um die Kerndienst-Anforderungsinformation zu übertragen.

8. Verfahren zur gemeinsamen Nutzung von Diensten in einem Netzwerk, mit den Schritten:
Festlegen (S1) einer Dienstrolle zur gemeinsamen Nutzung eines mit einem gewünschten Netzwerk verbundenen gewünschten Kerndienstes; und
Anfordern des gewünschten Kerndienstes, der zur gewünschten Dienstunterstützung abhängig von der festgelegten Dienstrolle von einer Plattform eines extern zugeordneten Gerätes angefordert wird.

9. Verfahren nach Anspruch 8, welches ferner den Schritt des Betriebs des zur Unterstützung des gewünschten Dienstes angeforderten Kerndienstes abhängig von der festgelegten Dienstrolle und der Übertragung (S20) des erzielten Ergebniswertes an eine Vorrichtung, welche den Kerndienst anforderte, umfasst.

10. Verfahren nach Anspruch 8 oder 9, wobei die Festlegung der Dienstrolle beinhaltet:
Sammeln von Systemressourceninformation aus Geräten, welche mit dem Netzwerk verbunden sind; und
Festlegen der Dienstrolle unter Verwendung der gesammelten Systemressourceninformation.

11. Verfahren nach Anspruch 10, welches ferner den Schritt der Konfigurierung der festgelegten Dienstrolle und der Informierung der mit dem Netzwerk der Konfiguration verbundenen Geräte umfasst.

12. Verfahren nach Anspruch 10 oder 11. welches ferner den Schritt der Anforderung von Proxy-Information aus dem Gerät, das für die Bereitstellung des gewünschten Kerndienstes abhängig von der von der Dienstrollen-Konfigurationseinheit zugeordnet ist, und der Konfiguration der Proxy-Information des Gerätes aufweist.

13. Verfahren nach einem der vorstehenden Ansprüche 10 bis 12, wobei die Dienstrolle abhängig von der durch einen gewünschten Auswahlalgorithmus gesammelten Systemressourceninformation festgelegt wird.

14. Verfahren nach einem der vorstehenden Ansprüche 10 bis 13, wobei die Anforderung des Kerndienstes von der Diensteplattform des extern zugeordneten Gerätes umfasst:
Senden (S18) von Kerndienst-Anforderungsinformation an das zugeordnete Gerät, um den Kerndienst bereitzustellen, wenn der Kerndienst angefordert wird;
Freigeben (S19) des dem extern zugeordneten Gerät entsprechenden Kerndienstes, dass er gemäß der empfangenen Kerndienst-Anforderungsinformation arbeitet; und
Versorgen (S20) des Gerätes, welches den Kerndienst angefordert hat, mit einem Ergebniswert, der als ein Ergebnis des Betriebs des Kerndienstes erhalten wurde.

15. Verfahren nach Anspruch 14, wobei die Kerndienst-Anforderungsinformation unter Verwendung von Proxy-Information des zur Bereitstellung des Kemdlenstes zugeordneten Gerätes übertragen wird.

16. Computerlesbares Medium mit von einem Computer ausführbaren Programmcodes, um ein Verfahren zur gemeinsamen Nutzung von Diensten in einem Netzwerk durchzuführen, wobei das Verfahren die Schritte aufweist:
Festlegen einer Dienstrolle zur gemeinsamen Nutzung eines gewünschten Kerndienstes, der mit einem gewünschten Netzwerk verbunden ist, und
Anfordern des gewünschten Kerndienstes, der zur gewünschten Dienstunterstützung abhängig von der festgelegten Dienstrolle aus einer Plattform eines extern zugeordneten Gerätes angefordert wird.

## Revendications

1. Dispositif (100) pour partager des services sur un réseau, comportant :
une unité de configuration de rôle de service (110) pour déterminer un rôle de service afin de partager un service principal voulu via un algorithme de choix lorsque connecté à un réseau voulu, et
une unité de traitement de demande de service (130) pour traiter et demander un service principal demandé pour supporter un service voulu depuis une plate-forme de services d'un dispositif externe attribué pour délivrer le service principal voulu, conformément au rôle de service déterminé par l'unité de configuration de rôle de service.

2. Dispositif selon la revendication 1, dans lequel l'algorithme de choix comporte un mécanisme pour déterminer le rôle de service conformément à des informations de ressources système collectées depuis des dispositifs fonctionnant sur le réseau.

3. Dispositif selon la revendication 2, dans lequel l'unité de configuration de rôle de service est opérationnelle pour informer les dispositifs sur le réseau du rôle de service déterminé.

4. Dispositif selon l'une quelconque des revendications précédentes, dans lequel l'unité de configuration de rôle de service est opérationnelle pour demander des informations de serveur mandataire depuis le dispositif externe attribué pour délivrer le service principal voulu conformément au rôle de service et pour configurer les informations de serveur mandataire du dispositif externe.

5. Dispositif selon l'une quelconque des revendications précédentes, dans lequel l'unité de traitement de demande de service inclut :
une partie de conversion de données (131) pour convertir des informations de demande de service principal afin de transmettre le service principal demandé, conformément au rôle de service, à la plate-forme de services du dispositif attribué, et
un éditeur de liens de service principal (133) pour transmettre des informations de demande de service principal converties par la partie de conversion de données à la plate-forme de services du dispositif attribué.

6. Dispositif selon la revendication 5, dans lequel la partie de conversion de données est opérationnelle pour analyser les informations de demande de service principal conformément au rôle de service de données et pour permettre l'activité du service principal demandé pour supporter le service voulu correspondant.

7. Dispositif selon la revendication 5 ou 6, dans lequel l'éditeur de liens de service principal est opérationnel pour utiliser des informations de serveur mandataire du dispositif externe afin de transmettre les informations de demande de service principal.

8. Procédé pour partager des services sur un réseau, comportant les étapes consistant à :
déterminer (S1) un rôle de service pour partager un service principal voulu connecté à un réseau voulu, et
demander le service principal voulu demandé pour un support de service voulu conformément au rôle de service déterminé depuis une plate-forme d'un dispositif attribué en externe.

9. Procédé selon la revendication 8, comportant en outre les étapes consistant à exécuter le service principal demandé pour supporter le service voulu conformément au rôle de service déterminé et à transmettre (S20) la valeur de résultat obtenue à un dispositif qui a demandé le service principal.

10. Procédé selon la revendication 8 ou 9, dans lequel la détermination du rôle de service inclut les étapes consistant à :
collecter des informations de ressources système depuis des dispositifs qui sont connectés au réseau, et
déterminer le rôle de service en utilisant les informations de ressources système collectées.

11. Procédé selon la revendication 10, comportant en outre les étapes consistant à configurer le rôle de service déterminé et à informer les dispositifs connectés au réseau de la configuration.

12. Procédé selon la revendication 10 ou 11, comportant en outre les étapes consistant à demander des informations de serveur mandataire depuis le dispositif attribué pour délivrer le service principal voulu conformément au rôle de service déterminé et configurer des informations de serveur mandataire du dispositif.

13. Procédé selon l'une quelconque des revendications 10 à 12, dans lequel le rôle de service est déterminé conformément aux informations de ressources système collectées via un algorithme de choix voulu.

14. Procédé selon l'une quelconque des revendications 8 à 13, dans lequel la demande du service principal depuis la plate-forme de services du dispositif attribué en externe inclut les étapes consistant à :
transmettre (S18) des informations de demande de service principal au dispositif attribué pour délivrer le service principal lorsque le service principal est demandé,
permettre (S19) l'exécution du service principal correspondant au dispositif attribué en externe, conformément aux informations de demande de service principal reçues, et
délivrer (S20) une valeur de résultat obtenue en résultat de l'exécution du service principal au dispositif qui a demandé le service principal.

15. Procédé selon la revendication 14, dans lequel les informations de demande de service principal sont transmises en utilisant des informations de serveur mandataire du dispositif attribué pour délivrer le service principal.

16. Support lisible par ordinateur incluant des codes de programme exécutables par un ordinateur pour mettre en oeuvre un procédé destiné à partager des services sur un réseau, ledit procédé comportant les étapes consistant à :
déterminer un rôle de service pour partager un service principal voulu connecté à un réseau voulu, et
demander le service principal voulu demandé pour un support de service voulu conformément au rôle de service déterminé depuis une plate-forme d'un dispositif attribué en externe.
